# EUROPEAN PATENT APPLICATION

(11) **EP 0 557 091 A1**
(43) Date of publication of application: **25.08.1993**
(21) Application number: 93301192.6
(22) Date of filing: 18.02.1993
(51) Int. Cl.: B60C 17/00, B60C 13/00

(54) **Pneumatic safety radial tires**

(30) Priority: 21.02.1992 JP 35032/92; 21.02.1992 JP 35035/92
(71) Applicant: BRIDGESTONE CORPORATION, Tokyo 104 (JP)
(72) Inventor: Kawabata, Misao, Tokorozawa City, Saitama Pref. (JP); Hayashi, Kazuo, Kodaira City, Tokyo (JP)
(74) Representative: Whalley, Kevin

(57) **Abstract**

A pneumatic radial tire has an aspect ratio of not more than 55% and a speed range of VR or a higher grade speed range and includes a tread crown portion (6), a pair of sidewall portions (7), a pair of bead portions (8), a carcass (1), a belt (2) arranged on the radially outer side of the carcass, and a pair of substantially crescent-shaped rubber-reinforcing layers (4). The carcass (1) includes at least one carcass ply, and the belt (2) includes at least two belt plies. The rubber-reinforcing layers (4) are each located on an inner surface of the tire over substantially the entire area of the side wall. A puncture-running discriminating layer (9, 10, 11, 12) is provided on an inner surface, an outer surface, or a near outer surface of each of the sidewalls (7), which contacts the road in the punctured state.

## Description

The present invention relates to pneumatic safety radial tires. Particularly, the invention relates to novel pneumatic safety radial tires having an aspect ratio of not more than 55% and a speed range of VR or a higher grade speed range, which tires make it possible to discriminate at a glance whether the tires have undergone running in a punctured state or not, so that re-use of the tires having run in the punctured state may be prevented to avoid dangers.

There have formerly existed no literatures relating to means for positively discriminating use history as to whether tires have run in the punctured state or not.

Even when conventional pneumatic safety tires are run in the punctured state, the tires may be used again upon application of internal pressure after repair, so long as the tires have not undergone such damages as to conspicuously deteriorate appearance due to running under puncture. At that time, one cannot readily judge the history of running of the tires in the punctured state based on the appearance.

However, when the tire is used again after the puncture repair in the state that the carcass, the belt, the bead portion or the run-flat reinforcing rubber portion is fatigued due to running in the punctured state to diminish essential strength of the tire, this may cause dangers such as bursting or carcass break-up (CBU), even though the appearance of the tire is not bad.

It is an object of the present invention to provide pneumatic safety radial tires which make it possible to discriminate at a glance from outside whether the tires have run in a punctured state or not.

The present invention relates to a pneumatic safety radial tire having an aspect ratio of not more than 55% and a speed range of VR or a higher grade speed range and comprising a tread crown portion, a pair of sidewalls, a pair of bead portions, a carcass, a belt, arranged on a crown portion on a radially outer side of the carcass, and a pair of substantially crescent-shaped rubber-reinforcing layers, said carcass including at least one carcass ply composed of cords arranged relative to a circumferential direction of the tire at substantially 90°, said belt including at least two belt plies composed of cords arranged relative to the circumferential direction of the tire at a relatively small angle in the state that the cords in one belt ply cross those in the belt ply adjacent thereto, said rubber-reinforcing layers being each located on an inner side of the tire over a substantially entire area of the sidewall, wherein a puncture-running discriminating layer is provided on an inner surface or an outer surface, or in a near outer surface portion of each of the sidewalls, which contacts the road in the punctured state.

When the puncture-running discriminating layer is to be applied to the inner surface of the sidewall of the tire, the puncture-running discriminating layer may be a coated layer which does not change under ordinary running conditions but undergoes surface-state change such as cracking or peeling under abnormal running conditions, or the puncture-running discriminating layer may be a pasted layer formed by pasting a plastic sheet a fiber cloth sheet or a metal foil, which layer does not change under ordinary running conditions but is wrinkled or waved under abnormal running conditions. In this case, whether the tire has run in the punctured state or not can be judged by removing the air-removed tire disassembled from a wheel and observing the inner surface thereof.

In this connection, note is to be taken that substantially no abnormality occurs in the puncture-running discriminating layer during ordinary running, and that the following defect will appear in this discriminating layer substantially only on running in the punctured state.

When the puncture-running discriminating layer is arranged on the radially outer surface of the sidewall, the puncture-running discriminating layer may be a colored rubber layer or a colored coated film layer. Such a colored rubber layer is bonded to the sidewall. In the case of the colored rubber layer or the colored coated layer, the judgment is effected based on creases or waving. When the puncture-running discriminating layer is provided in a near radially outer surface portion of the sidewall portion, the above colored rubber layer is advantageously employed. In each of the above cases, whether the tire has run in the punctured state or not can be judged by observing whether the discriminating layer is worn or peeled or exposed to outside through wearing of the surface rubber layer due to running in the punctured state or not. Besides the above constructions, the puncture-running discriminating layer may be constituted by a combination of two kinds of rubbers having different wear-resisting powers which are arranged in vertically two stages on a radially outer side of the sidewall as a side rubber contacting with the road in the punctured state. In this case, these two kinds of the rubbers having different wear-resisting powers are arranged at the radially two stages on the axially outer side of the sidewall as the side rubber thereof which do not substantially contact the road during use under application of an ordinary internal pressure but the first contacts the roads or running in the punctured state. Thus, when the the radially outer side of the sidewall contacts the road and wears under running in the punctured state, a stepped wearing occurs at a boundary portion of the rubbers due to different worn degrees.

According to the present invention, if the tire runs in the punctured state, abnormality appears on or in the puncture-running discriminating layer arranged in the sidewall. Thus, whether the tire has run in the punctured state or not can be visually observed at a glance, which becomes an alarm to prevent re-use of the tire through mere application of the internal pressure or repair. As to two kinds of the rubbers having different wear-resistance powers, if the tire runs in the punctured state, the stepped wearing appears on the sidewall portion as mentioned above. Thus, this also becomes an alarm to prevent re-use of the tire through mere application of the internal pressure or repair.

Tires requiring such an alarm are pneumatic safety radial tires having an aspect ratio of not more than 55% and a speed range of VR or a higher grade speed range which make much of safety running in use conditions particularly at very high speeds. The present invention is indispensably applied to the tires of this type having the aspect ratio of not more than 55% and the speed range of VR or a higher grade speed range.

According to the present invention, the puncture-running discriminating layer may be formed as follows.

That is, the coated film layer may be formed by coating an acryl paint or the like onto the tire. The bonded layer may be formed by bonding a metallic foil onto the tire after vulcanization. The colored rubber layer may be formed by attaching a pigment-colored rubber layer onto the green tire and then vulcanizing the rubber layer and the tire. The puncture-running discriminating layer may be formed by extruding a combination of two kinds of rubber materials of which compositions are varied, attaching this rubber material combination onto the green tire, and then vulcanizing the rubber material composition and the green tire.

These and other objects, features and advantages of the invention will be appreciated upon reading of the following description of the invention when taken in conjunction with the attached drawings, with the understanding that some modifications, variations and changes of the same could be easily made by the skilled person in the art to which the invention pertains without departing from the spirit of the invention or the scope of claims appended hereto.

For a better understanding of the invention, reference is made to the attached drawings, wherein:
Fig. 1 is a sectional view of an embodiment of the pneumatic safety radial tire according to the present invention;
Fig. 2 is a sectional view of another embodiment of the pneumatic safety radial tire of the present invention;
Fig. 3 is a sectional view of a further embodiment of the pneumatic safety radial tire of the invention; and
Fig. 4 is a sectional view of a still further embodiment of the pneumatic radial tire of the invention.

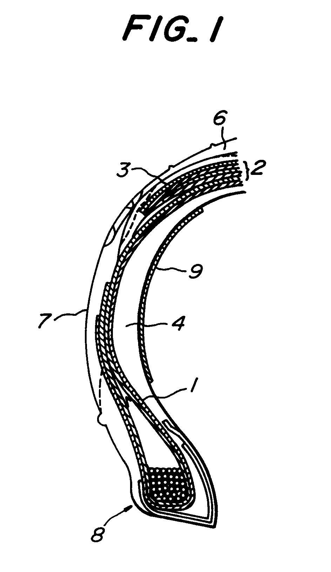

The present invention will be concretely explained first with reference to Fig. 1. Fig. 1 is a widthwise sectional view of a left portion of an embodiment of the pneumatic safety radial tire of the present invention in which a puncture-running discriminating layer is provided on a radially inner surface of a sidewall according to the present invention. The tire has an aspect ratio of not more than 55% and a speed range of VR or a higher grade speed range, and includes a carcass 1 composed of two carcass plies, a belt 2 composed of four belt layer in this embodiment, a beltreinforcing layer 3, and a pair of crescent rubber-reinforcing layers 4.

The tire further includes a tread crown portion 6, a pair of sidewalls 7, and a pair of bead portions 8. The carcass 1 includes two plies composed of cords made of rayon and inclined at substantially 90° relative to a circumferential direction of the tire. The belt 2 includes first and second plies made of steel cords inclined at substantially 27° relative to the tire-circumferential direction such that the cords in one ply cross those in the other. The belt-reinforcing layer 3 surrounds the belt 2, and includes organic fiber cords made of such as nylon and arranged substantially in parallel to the tire-circumferential direction. The rubber-reinforcing layer 4 is arranged on a radially inner side of the tire over a substantially entire area of the sidewall 7, and substantially has such a crescent shape in section that the thickness of the rubber-reinforcing layer 4 is reduced from the maximum thickness near a flexible zone of the sidewall 7 in axially upper and lower directions.

In this embodiment, a puncture-running discriminating layer 9 is provided on the radially inner surface of the sidewall 7. This discriminating layer changes a surface state or the like, if the sidewall portion contacts the road and undergoes large compression strain in the punctured state.

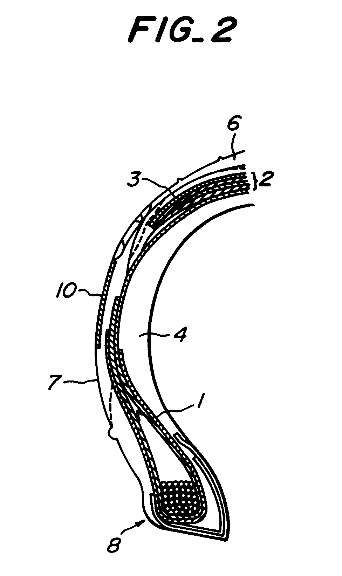

Fig. 2 is a widthwise sectional view of a left portion of another embodiment of the pneumatic safety radial tire of the present invention in which a puncture-running discriminating layer 10 is provided on a radially outer surface of a sidewall. The tire of Fig. 2 also has an aspect ratio of not more than 55% and a speed range of VR or a higher grade speed range. Same reference numerals as in Fig. 1 are given to the same constituent parts of the tire in Fig. 2, and explanation thereof is omitted. The tire in Fig. 2 has the basically same construction as that of the tire of Fig. 1 except that the puncture-running discriminating layer 10 is provided over a radially outer portion of the sidewall portion 7 which radially outer portion is brought into contact with the road in the punctured state. In this case, the puncture-running discriminating layer 10 is in flush with the radially outer surface of the remaining sidewall.

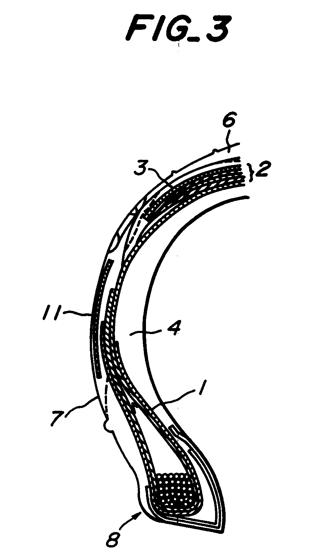

Fig. 3 is a widthwise sectional view of a left portion of a further embodiment of the pneumatic safety radial tire of the present invention in which a puncture-running discriminating layer 11 is provided in a near radially outer surface of a sidewall. The tire of Fig. 3 has an aspect ratio of not more than 55% and a speed range of VR or a higher grade speed range. Same reference numerals in Fig. 1 are given to the same constituent parts of the tire as in Fig. 3, and explanation thereof is omitted. The tire in Fig. 3 also has the basically same construction as that of the tire of Fig. 1 except that the puncture-running discriminating layer 11 is buried in a radially outer portion of the sidewall 7 which radially outer portion is brought into contact with the road in the punctured state. The distance between the radially outer surface of the sidewall 7 and the puncture-running discriminating layer 11 is set at such a level that if the tire runs in the punctured state, the discriminating layer will be exposed to outside from the radially outer surface of the sidewall portion.

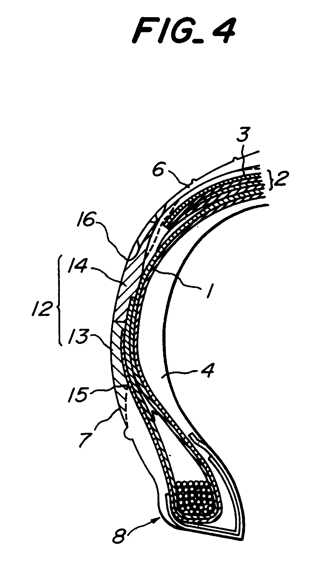

Fig. 4 is a widthwise sectional view of a left portion of a still further embodiment of the pneumatic safety radial tire of the present invention in which a puncture-running discriminating layer 12 is provided on a radially outer surface of a sidewall. The tire of Fig. 4 has an aspect ratio of not more than 55% and a speed range of VR or a higher grade speed range. Same reference numerals in Fig. 1 are given to the same constituent parts of the tire as in Fig. 4, and explanation thereof is omitted. The tire in Fig. 4 also has the basically same construction as that of the tire of Fig. 1 except that a puncture-running discriminating layer 12 is constituted by side rubbers 13, 14 arranged in a radially outer portion of the sidewall 7 in radially two stages. The radially lower and upper rubbers 13 and 14 are continuously arranged. The boundary 11 between the side rubbers 13 and 14 is preferably located at a center of he portion sandwiched between a lowermost end 15 of the sidewall portion contacting the road in the tire-punctured state and a lower end 16 of a buttress groove. As the upper side rubber 14, a rubber having wear resistance greater than that of the lower rubber 13 is used.

### (Experiments)

The present invention will be explained with reference to the following experiments.

### Experiment 1:

A test pneumatic radial tire having the same tire construction as that in Fig. 1 and a tire size of 255/40 VR17 was prepared, in which a coated film layer having a thickness of 0.2 mm or an aluminum foil-bonded layer having a thickness of 0.1 mm was provided as the puncture-running discriminating layer 9. The tire had an aspect ratio of 40% and the speed range VR. The tire was punctured after being fitted to an actual vehicle, and subjected to a slalom running at 80 km/h over 3 km. Then, the tire was removed from a rim, and the inner surface of the sidewall 7 was inspected, which revealed that the history of running in the punctured state was represented by cracking of the coated layer or numerous wrinkles of the aluminum foil-bonded layer. However, this tire exhibited no abnormal properties under ordinary running conditions. Once the tire exhibited the history of running in the punctured state, this indicated that the tire should never be used again even after repair.

### Experiment 2:

A test pneumatic radial tire having the same tire construction as that in Fig. 2 and a tire size of 255/40 VR17 was prepared, in which a bonded layer of a color rubber sheet having a thickness of 0.5 mm or a coated layer having a thickness of 0.2 mm was provided on the radially outer surface of the sidewall portion 7 as the puncture-running discriminating layer 10. The rubber sheet was colored with a pigment. The tire has an aspect ratio of 40% and the speed range VR. The thus prepared tire was fitted to the actual vehicle, and subjected to the slalom running at 80 km/h in the punctured state. It was revealed that the puncture-running over 1 km caused wearing of the colored rubber sheet or peeling of the coated film. However, this tire exhibited no abnormal properties under ordinary running conditions.

### Experiment 3:

A test pneumatic safety radial tire having the same type and performance as the above test tires was prepared, provided that a colored rubber layer having a thickness of 1 mm was buried inside a side rubber as the puncture-running discriminating layer 11 at a depth of 0.5 mm from the radially outer surface of the sidewall 7 to a radially outer surface of the colored rubber layer as shown in Fig. 3. Then, the test tire was fitted to the actual vehicle, and subjected to the slalom running at 80 km/h in the punctured state. It was revealed that the 3 km puncture-running caused the colored rubber to be exposed outside. However, this tire exhibited no abnormal properties under ordinary running conditions.

### Experiment 4:

A test pneumatic safety radial tire having a tire size of 255/40 VR17 with an aspect ratio of 40% and a speed range VR were prepared according to Fig. 4, in which the radially lower side rubber 13 and the radially upper side rubber 14 were made of respective rubber compositions of which recipe was changed, respectively. After the test tire was fitted to the actual vehicle and punctured, the tire was subjected to the slalom running at 80 km/h. It was revealed that the 3 km puncture-running caused a stepped wear over the lower and upper side rubbers, which represented the history of the running in the punctured state.

According to the present invention, since the puncture-running discriminating layer is arranged on the radially inner or outer surface of or in the near radially outer surface portion of the sidewall, whether the tire has run in the punctured state or not can be easily judged from the change in the property of the puncture-running discriminating layer. Thus, the present invention is useful for the control of safety use in the case of pneumatic safety radial tires requiring the prevention of the tires having undergone the punctured running from being used again after the repair, particularly in the case of the high speed grade tires.

## Claims

1. A pneumatic radial tire having an aspect ratio of not more than 55% and a speed range of VR or a higher grade speed range, and comprising a tread crown portion (6), a pair of sidewall portions (7), a pair of bead portions (8), a carcass (1), a belt (2) arranged on the crown portion on the radially outer side of the carcass, and a pair of substantially crescent-shaped rubber-reinforcing layers (4), the said carcass (1) including at least one carcass ply composed of cords arranged relative to the circumferential direction of the tire at substantially 90', the said belt (2) including at least two belt plies composed of cords arranged relative to the circumferential direction of the tire at a relatively small angle in the state that the cords in one belt ply cross those in a belt ply adjacent thereto; and the said rubber-reinforcing layers (4) being each located on an inner side of the tire over substantially the entire area of the sidewall (7), wherein a puncture-running discriminating layer (9, 10, 11, 12) is provided on an inner surface or an outer surface, or in a near outer surface portion of each of the sidewalls, which contacts the road in the punctured state.

2. A tire as claimed in Claim 1, characterized in that the puncture-running discriminating layer (9, 10, 11) is a coated film layer, a bonded layer of a plastic sheet or a fiber cloth sheet or a metal foil, a coloured rubber layer or a coloured coated film layer.

3. A tire as claimed in Claim 2, characterized in that, when the discriminating layer (11) is provided in a near outer surface portion of the sidewall portion (7), the puncture-running discriminating layer is a coloured rubber layer.

4. A tire as claimed in Claim 1, characterized in that the puncture-running discriminating layer (12) comprises a combination of two rubbers (13, 14) having different wear-resistances which are arranged one above the other at the radially outer side to constitute a sidewall portion (7) contacting with the road in the punctured state.
